(19) Europäisches Patentamt / European Patent Office / Office européen des brevets

(11) **EP 4 357 378 A1**

(12) **EUROPEAN PATENT APPLICATION**
published in accordance with Art. 153(4) EPC

(43) Date of publication:
**24.04.2024 Bulletin 2024/17**

(21) Application number: **22876756.2**

(22) Date of filing: **23.09.2022**

(51) International Patent Classification (IPC):
*C08F 279/02* (2006.01)      *C08F 2/30* (2006.01)

(52) Cooperative Patent Classification (CPC):
**C08F 2/30; C08F 279/02**

(86) International application number:
**PCT/KR2022/014224**

(87) International publication number:
**WO 2023/054984 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 KR 20210129837
22.09.2022 KR 20220120161**

(71) Applicant: **LG Chem, Ltd.
Seoul 07336 (KR)**

(72) Inventors:
• **HWANG, Moon Ja
  Daejeon 34122 (KR)**
• **KIM, Chang Hoe
  Daejeon 34122 (KR)**
• **CHAE, Min Su
  Daejeon 34122 (KR)**
• **KIM, Geon Soo
  Daejeon 34122 (KR)**
• **JEON, Hee Jung
  Daejeon 34122 (KR)**
• **KIM, Hyung Joon
  Daejeon 34122 (KR)**

(74) Representative: **Plasseraud IP
66, rue de la Chaussée d'Antin
75440 Paris Cedex 09 (FR)**

(54) **METHOD FOR PREPARING GRAFT POLYMER**

(57)    The present invention relates to a method of preparing a graft polymer, which includes: preparing a second diene-based rubber polymer by enlarging a first diene-based rubber polymer with an acidic group-containing acrylic polymer; preparing a first mixture comprising the second diene-based rubber polymer and a non-ionic emulsifier; and preparing a graft polymer latex by polymerizing an aromatic vinyl-based monomer and a vinyl cyanide-based monomer in the presence of the first mixture.

**EP 4 357 378 A1**

**Description**

[Technical Field]

<u>Cross-Reference to Related Applications</u>

This application claims priority to and the benefit of Korean Patent Application No. 10-2021-0129837, filed on September 30, 2021, and Korean Patent Application No. 10-2022-0120161, filed on September 22, 2022, the disclosures of which are incorporated herein by reference in their entireties.

<u>Technical Field</u>

The present invention relates to a method of preparing a graft polymer, and specifically, to a method of preparing a graft polymer having high storage stability, excellent processability, and excellent falling ball impact strength.

[Background Art]

Diene-based graft polymers may be prepared by graft polymerization of aromatic vinyl-based monomers and vinyl cyanide-based monomers to diene-based rubber polymers. The diene-based graft polymer exhibits excellent physical properties such as high impact resistance, chemical resistance, thermal stability, colorability, fatigue resistance, rigidity, processability, and the like as compared to high-impact polystyrene (HIPS), and among the physical properties, processability particularly is excellent. Due to these properties, the diene-based graft polymer may be used in automotive interior/exterior materials, office equipment, various electrical and electronic products, toys, or the like.

Meanwhile, the impact resistance of thermoplastic resin compositions comprising the diene-based graft polymer may be adjusted by adjusting diene-based rubber polymers or a composition of grafted monomer units (composition of grafted shell). Also, the impact resistance of thermoplastic resin compositions is affected by the type of non-grafted polymer used with the diene-based graft polymer, and the average particle diameter of a diene-based rubber polymer, which is capable of maximizing the efficiency of impact resistance, varies depending on the type of non-grafted polymer. The average particle diameter of a diene-based rubber polymer may be adjusted by polymerization or by preparing a diene-based rubber polymer having a small particle diameter and then enlarging the same. However, when acetic acid is used as a coagulant in the enlargement, an excessive amount of coagulum is generated. Also, when the concentration of a diene-based rubber polymer latex is lowered to reduce the generation of a coagulum, productivity is degraded. In order to resolve the above problem, the use of an acidic group-containing acrylic polymer comprising an ethylenically unsaturated acid monomer unit and an acrylic monomer unit has been proposed, but this method has a problem in that the long-term storage stability of a diene-based graft polymer is degraded, and processability and falling ball impact strength are also degraded.

[Related-Art Documents]

[Patent Documents]

(Patent Document 1) KR2020-0011701A

[Disclosure]

[Technical Problem]

The present invention is directed to providing a method of preparing a graft polymer whose storage stability, processability, and falling ball impact strength are excellent.

[Technical Solution]

(1) One aspect of the present invention provides a method of preparing a graft polymer, which comprises: preparing a second diene-based rubber polymer by enlarging a first diene-based rubber polymer with an acidic group-containing acrylic polymer; preparing a first mixture comprising the second diene-based rubber polymer and a non-ionic emulsifier; and preparing a graft polymer latex by polymerizing an aromatic vinyl-based monomer and a vinyl cyanide-based monomer in the presence of the first mixture.

(2) According to (1), the present invention provides a method of preparing a graft polymer in which the non-ionic emulsifier is one or more selected from the group consisting of poly(ethylene glycol) and poly(ethylene glycol)-block-poly(propylene glycol)-block-poly(ethylene glycol).

(3) According to (1) or (2), the present invention provides a method of preparing a graft polymer in which the first mixture comprises the second diene-based rubber polymer and the non-ionic emulsifier in a weight ratio of 95.0:5.0 to 99.5:0.5.

(4) According to any one of (1) to (3), the present invention provides a method of preparing a graft polymer in which the acidic group-containing acrylic polymer comprises an ethylenically unsaturated acid monomer unit and a (meth)acrylate-based monomer unit.

(5) According to any one of (1) to (4), the present invention provides a method of preparing a graft polymer in which the acidic group-containing acrylic polymer has a weight-average molecular weight of 300,000 to 600,000 g/mol.

(6) According to any one of (1) to (5), the present invention provides a method of preparing a graft polymer in which the first diene-based rubber polymer has an average particle diameter of 50 to 200 nm, and the second diene-based rubber polymer has an average particle diameter of 250 to 450 nm.

(7) According to any one of (1) to (6), the present invention provides a method of preparing a graft polymer, which comprises, before the step of preparing a graft polymer latex: preparing a third diene-based rubber polymer by polymerizing diene-based monomers; and preparing a second mixture comprising the third diene-based rubber polymer and a non-ionic emulsifier, wherein the step of preparing a graft polymer latex is a step of preparing a graft polymer latex by polymerizing the aromatic vinyl-based monomer and the vinyl cyanide-based monomer in the presence of the first mixture and the second mixture.

(8) According to (7), the present invention provides a method of preparing a graft polymer in which the third diene-based rubber polymer has an average particle diameter of 250 to 450 nm.

(9) According to (7), the present invention provides a method of preparing a graft polymer in which the second mixture comprises the third diene-based rubber polymer and the non-ionic emulsifier in a weight ratio of 95.0:5.0 to 99.5:0.5.

(10) According to (7), the present invention provides a method of preparing a graft polymer in which a weight ratio of the first mixture and the second mixture is 95:5 to 50:50.

[Advantageous Effects]

According to a preparation method of the present invention, the storage stability of a graft polymer can be improved, and processability and falling ball impact strength can also be significantly improved.

[Modes of the Invention]

Hereinafter, the present invention will be described in further detail to help in understanding the present invention.
Terms and words used in this specification and claims should not be interpreted as being limited to commonly used meanings or meanings in dictionaries, and, based on the principle that the inventors can appropriately define concepts of terms in order to describe their invention in the best way, the terms and words should be interpreted with meanings and concepts which are consistent with the technical spirit of the present invention.
In the present invention, the average particle diameters of an acidic group-containing acrylic polymer, a first diene-based rubber polymer, a second diene-based rubber polymer, a third diene-based rubber polymer, a first mixture, and a second mixture may be measured by dynamic light scattering, specifically, by using Nicomp 380 HPL commercially available from Nicomp. In the present invention, an average particle diameter may refer to an arithmetic average particle diameter in the particle size distribution as measured by dynamic light scattering, that is, an average particle diameter based on a scattering intensity distribution.
In the present invention, the weight-average molecular weight of an acidic group-containing acrylic polymer may be measured by gel permeation chromatography analysis after an acidic group-containing acrylic polymer latex is dissolved in tetrahydrofuran to adjust a concentration to 2 mg/ml, then stirred for 12 hours, and filtered through a 45 nm polytetrafluoroethylene filter.
In the present invention, a gel content may be calculated by the method described below.
First, a diene-based rubber polymer latex is added to ethanol to obtain a precipitate. The precipitate is filtered through a wire mesh and then primarily dried. The primary dried solid is added to toluene and then stored in a dark room. The swelled precipitate is filtered through a wire mesh and then secondarily dried to obtain a secondary dried solid. Then, the primary dried solid and the secondary dried solid are weighed, and then results thereof are substituted into the following equation to calculate a gel content.
Gel content (wt%) = {(Weight of secondary dried solid) / (Weight of primary dried solid added to toluene)} × 100

In the present invention, a first diene-based rubber polymer is prepared by polymerizing diene-based monomers, and the diene-based monomer may be one or more selected from the group consisting of 1,3-butadiene, isoprene, chloroprene, and piperylene, with 1,3-butadiene being preferred.

In the present invention, an ethylenically unsaturated acid monomer unit is a unit derived from an ethylenically unsaturated acid monomer, and the ethylenically unsaturated acid monomer may be one or more selected from the group consisting of acrylic acid, methacrylic acid, itaconic acid, crotonic acid, fumaric acid, and maleic acid, with methacrylic acid being preferred.

In the present invention, a (meth)acrylate-based monomer unit is a unit derived from a (meth)acrylate-based monomer. The (meth)acrylate-based monomer is a term encompassing both an acrylate-based monomer and a methacrylate-based monomer. The (meth)acrylate-based monomer may be one or more selected from the group consisting of methyl acrylate, ethyl acrylate, propyl acrylate, butyl acrylate, methyl methacrylate, ethyl methacrylate, propyl methacrylate, and butyl methacrylate, with one or more selected from the group consisting of methyl acrylate and ethyl acrylate being preferred.

In the present invention, an aromatic vinyl-based monomer may be one or more selected from the group consisting of styrene, $\alpha$-methyl styrene, $\alpha$-ethyl styrene, and p-methyl styrene, with styrene being preferred.

In the present invention, a vinyl cyanide-based monomer may be one or more selected from the group consisting of acrylonitrile, methacrylonitrile, phenyl acrylonitrile, and $\alpha$-chloro acrylonitrile, with acrylonitrile being preferred.

In the present invention, an initiator may be one or more selected from the group consisting of potassium persulfate, sodium persulfate, ammonium persulfate, cumene hydroperoxide, diisopropylbenzene hydroperoxide, azobisisobutyronitrile, t-butyl hydroperoxide, p-menthane hydroperoxide, and benzoyl peroxide, with one or more selected from the group consisting of t-butyl hydroperoxide and cumene hydroperoxide being preferred.

In the present invention, a molecular weight controlling agent may be one or more selected from the group consisting of an $\alpha$-methyl styrene dimer, t-dodecyl mercaptan, n-dodecyl mercaptan, t-octyl mercaptan, n-octyl mercaptan, carbon tetrachloride, methylene chloride, methylene bromide, tetraethylthiuram disulfide, dipentamethylenethiuram disulfide, and diisopropyl xanthogen disulfide, with one or more selected from the group consisting of an $\alpha$-methyl styrene dimer and t-dodecyl mercaptan being preferred.

In the present invention, a redox-based catalyst may be one or more selected from the group consisting of sodium formaldehyde sulfoxylate, disodium dihydrogen phosphate, disodium ethylenediaminetetraacetate, ferrous sulfate, dextrose, sodium pyrophosphate, and sodium sulfate, with one or more selected from the group consisting of sodium formaldehyde sulfoxylate, disodium ethylenediaminetetraacetate, and ferrous sulfate being preferred.

## 1. Method of preparing graft polymer

A method of preparing a graft polymer according to an embodiment of the present invention comprises: preparing a second diene-based rubber polymer by enlarging a first diene-based rubber polymer with an acidic group-containing acrylic polymer; preparing a first mixture comprising the second diene-based rubber polymer and a non-ionic emulsifier; and preparing a graft polymer latex by polymerizing an aromatic vinyl-based monomer and a vinyl cyanide-based monomer in the presence of the first mixture.

The inventors of the present invention have found that, when a second diene-based rubber polymer prepared by an enlargement process is mixed with a non-ionic emulsifier, the storage stability of the second diene-based rubber polymer is significantly improved, and thus a particle diameter variation of the diene-based rubber polymer is minimized even after a long period of time, and a coagulum is not generated or minimized. In addition, the inventors have found that the stability of a graft polymer latex is significantly improved, and thus a coagulum is not generated or minimized, and processability is significantly improved. Additionally, the inventors have found that, since a graft polymer that achieves a multimodal particle diameter distribution while achieving an appropriate average particle diameter is prepared, it can be uniformly distributed in a non-grafted polymer, and an effect of absorbing impact energy is substantially increased, and thus falling ball impact strength is also significantly improved. Based on these facts, the inventors of the present invention have completed the present invention.

Hereinafter, the method of preparing a graft polymer according to an embodiment of the present invention will be described in detail.

## 1) Preparation of second diene-based rubber polymer

First, a first diene-based rubber polymer is enlarged with an acidic group-containing acrylic polymer to prepare a second diene-based rubber polymer.

The first diene-based rubber polymer may have an average particle diameter of 50 to 200 nm, preferably 70 to 180 nm, and more preferably 90 to 160 nm. When the above-described condition is satisfied, a problem in that productivity is degraded by excessively increasing a polymerization time in preparation of the first diene-based rubber polymer can be resolved. Also, when the acidic group-containing acrylic polymer is used, the first diene-based rubber polymer can be easily enlarged so as to have a desired average particle diameter.

The acidic group-containing acrylic polymer comprises an ethylenically unsaturated acid monomer unit and a (meth)acrylate-based monomer unit. The acidic group-containing acrylic polymer may comprise the ethylenically unsaturated acid monomer unit and the (meth)acrylate-based monomer unit in a weight ratio of 1:99 to 10:90, preferably, 3:97 to 8:92. When the above-described condition is satisfied, the first diene-based rubber polymer can be easily enlarged to have a desired size. Also, since an adequate amount of the ethylenically unsaturated acid monomer having a property of coagulating other substances is used, a graft polymer whose appearance characteristics and impact strength are excellent can be prepared.

The acidic group-containing acrylic polymer may have a weight-average molecular weight of 300,000 to 600,000 g/mol, preferably, 350,000 to 550,000 g/mol. When the above-described condition is satisfied, the storage stability of the second diene-based rubber polymer is improved, and the generation of a coagulum of a graft polymer is minimized, and thus polymerization stability can be improved to a level applicable to mass production.

The acidic group-containing acrylic polymer may have an average particle diameter of 50 to 200 nm, preferably 60 to 180 nm, and more preferably 70 to 160 nm. When the above-described condition is satisfied, a graft polymer whose appearance characteristics and impact strength are excellent can be prepared.

The acidic group-containing acrylic polymer may be included in an amount of 0.5 to 5.0 parts by weight, preferably, 1.0 to 4.0 parts by weight with respect to 100 parts by weight of the first diene-based rubber polymer. When the above-described condition is satisfied, the first diene-based rubber polymer can be easily enlarged, and a coagulation phenomenon may not occur.

The second diene-based rubber polymer may have an average particle diameter of 250 to 450 nm, preferably 265 to 430 nm, and more preferably 280 to 410 nm. When the above-described condition is satisfied, a graft polymer whose appearance characteristics and impact strength are excellent can be prepared.

Meanwhile, the first diene-based rubber polymer, the acidic group-containing acrylic polymer, and the second diene-based rubber polymer may be in the form of a latex, and contents thereof may be based on a solid.

**2) Preparation of first mixture**

Subsequently, a first mixture comprising the second diene-based rubber polymer and a non-ionic emulsifier is prepared.

When the first diene-based rubber polymer is enlarged with the acidic group-containing acrylic polymer after being mixed with a non-ionic emulsifier, the storage stability of the enlarged diene-based rubber polymer is not improved. Also, when a non-ionic emulsifier is added before the first diene-based rubber polymer is enlarged with the acidic group-containing acrylic polymer, a particle size distribution value is excessively increased, and thus room-temperature impact strength and falling ball impact strength are degraded. However, as in the present invention, when a first mixture comprising the second diene-based rubber polymer and a non-ionic emulsifier is prepared after the preparation of the second diene-based rubber polymer, the storage stability of the first mixture is significantly improved, and thus a particle diameter variation is minimized even when the second diene-based rubber polymer is stored for a long period of time, and the generation of a coagulum is minimized.

When the non-ionic emulsifier is used, the storage stability of the second diene-based rubber polymer and polymerization stability in graft polymerization of a shell can be significantly improved as compared to when a cationic emulsifier, an anionic emulsifier, or a base is used.

The first mixture may comprise the second diene-based rubber polymer and the non-ionic emulsifier in a weight ratio of 95.0:5.0 to 99.5:0.5, preferably, 96.0:4.0 to 99.5:0.5. When the above-described condition is satisfied, the storage stability of the second diene-based rubber polymer and polymerization stability in graft polymerization of a shell can be improved.

The non-ionic emulsifier may be one or more selected from the group consisting of poly(ethylene glycol) and poly(ethylene glycol)-block-poly(propylene glycol)-block-poly(ethylene glycol).

**3) Preparation of graft polymer latex**

An aromatic vinyl-based monomer and a vinyl cyanide-based monomer were polymerized in the presence of the first mixture to prepare a graft polymer latex.

The first mixture is included in an amount of 30 to 70 parts by weight, preferably, 35 to 65 parts by weight with respect to the sum (100 parts by weight) of amounts of the first mixture, aromatic vinyl-based monomer, and vinyl cyanide-based monomer. When the above-described condition is satisfied, a graft polymer having excellent impact strength can be prepared.

The sum of amounts of the aromatic vinyl-based monomer and the vinyl cyanide-based monomer may be 30 to 70 parts by weight, preferably, 35 to 65 parts by weight with respect to the sum (100 parts by weight) of amounts of the first mixture, aromatic vinyl-based monomer, and vinyl cyanide-based monomer. When the above-described condition is satisfied, a graft polymer whose processability and chemical resistance are excellent can be prepared.

With respect to the sum (100 parts by weight) of amounts of the aromatic vinyl-based monomer and the vinyl cyanide-based monomer, 65 to 80 parts by weight of the aromatic vinyl-based monomer and 20 to 35 parts by weight of the vinyl cyanide-based monomer may be included, preferably, 68 to 78 parts by weight of the aromatic vinyl-based monomer and 22 to 32 parts by weight of the vinyl cyanide-based monomer may be included. When the above-described condition is satisfied, a graft polymer whose processability and chemical resistance are excellent can be prepared.

In the preparation of a graft polymer latex, one or more selected from the group consisting of an initiator, a redox-based catalyst, a molecular weight controlling agent, an emulsifier, and an aqueous solvent may be further added.

The type of initiator is the same as described above, and one or more selected from the group consisting of t-butyl hydroperoxide and cumene hydroperoxide are preferred.

The initiator may be included in an amount of 0.10 to 3.00 parts by weight, preferably, 0.25 to 2.00 parts by weight with respect to the sum (100 parts by weight) of amounts of the first mixture, aromatic vinyl-based monomer, and vinyl cyanide-based monomer. When the above-described condition is satisfied, emulsion polymerization can be easily performed, and an amount of initiator remaining in a graft polymer can be minimized.

The redox-based catalyst may be included in an amount of 0.1000 to 2.000 parts by weight, preferably, 0.3000 to 0.1500 parts by weight with respect to the sum (100 parts by weight) of amounts of the first mixture, aromatic vinyl-based monomer, and vinyl cyanide-based monomer. When the above-described condition is satisfied, polymerization can be easily initiated at a relatively low temperature.

The molecular weight controlling agent may be included in an amount of 0.2 to 2.0 parts by weight, preferably, 0.4 to 1.3 parts by weight with respect to the sum (100 parts by weight) of amounts of the first mixture, aromatic vinyl-based monomer, and vinyl cyanide-based monomer. When the above-described condition is satisfied, a graft polymer whose storage stability, processability, and falling ball impact strength are excellent can be prepared.

The emulsifier may be included in an amount of 0.10 to 3.00 parts by weight, preferably, 0.25 to 2.00 parts by weight with respect to the sum (100 parts by weight) of amounts of the first mixture, aromatic vinyl-based monomer, and vinyl cyanide-based monomer. When the above-described condition is satisfied, polymerization stability and latex stability can be improved.

The aqueous solvent may be ion-exchanged water.

After the polymerization is completed, coagulation, aging, washing and drying processes may be further performed to obtain a powder-type graft polymer.

Meanwhile, in order to prepare a graft polymer having a multimodal particle diameter distribution, the method of preparing a graft polymer according to an embodiment of the present invention comprises, before the step of preparing a graft polymer latex: preparing a third diene-based rubber polymer by polymerizing diene-based monomers; and preparing a second mixture comprising the third diene-based rubber polymer and a non-ionic emulsifier, wherein the step of preparing a graft polymer latex may be a step of preparing a graft polymer latex by polymerizing the aromatic vinyl-based monomer and the vinyl cyanide-based monomer in the presence of the first mixture and the second mixture.

The preparation of a third diene-based rubber polymer may be achieved only by polymerization without a separate enlargement process to prepare a graft polymer having a multimodal particle diameter distribution.

The third diene-based rubber polymer may have an average particle diameter of 250 to 450 nm, preferably 270 to 430 nm, and more preferably 290 to 410 nm. When the above-described condition is satisfied, a graft polymer whose appearance characteristics and impact strength are excellent can be prepared.

The second mixture may comprise the third diene-based rubber polymer and the non-ionic emulsifier in a weight ratio of 95.0:5.0 to 99.5:0.5, preferably, 96.0:4.0 to 99.5:0.5. When the above-described condition is satisfied, the storage stability of the second mixture can be improved, and polymerization stability in polymerization of a shell can be improved.

The type of non-ionic emulsifier is the same as described above.

The sum of amounts of the first mixture and the second mixture may be 30 to 70 parts by weight, preferably, 35 to 65 parts by weight with respect to the sum (100 parts by weight) of amounts of the first mixture, second mixture, aromatic vinyl-based monomer, and vinyl cyanide-based monomer. When the above-described condition is satisfied, a graft polymer whose room-temperature impact strength and falling ball impact strength are excellent can be prepared.

A weight ratio of the first mixture and the second mixture may be 95:5 to 50:50, preferably, 90:10 to 50:50. When the above-described condition is satisfied, a graft polymer whose room-temperature impact strength and falling ball impact strength are excellent can be prepared.

The sum of amounts of the aromatic vinyl-based monomer and the vinyl cyanide-based monomer may be 30 to 70 parts by weight, preferably, 35 to 65 parts by weight with respect to the sum (100 parts by weight) of amounts of the first mixture, second mixture, aromatic vinyl-based monomer, and vinyl cyanide-based monomer. When the above-described condition is satisfied, a graft polymer whose processability and chemical resistance are excellent can be prepared.

A weight ratio of the aromatic vinyl-based monomer and the vinyl cyanide-based monomer may be 65:35 to 80:20, preferably, 70:30 to 78:22. When the above-described condition is satisfied, a graft polymer whose processability and chemical resistance are excellent can be prepared.

In addition, when compared with the case of preparing a graft polymer latex without using a second mixture, the amounts of the initiator, molecular weight controlling agent, redox-based catalyst, emulsifier, and aqueous solvent may be the same, except that the standard is changed to the sum (100 parts by weight) of amounts of the first mixture, second mixture, aromatic vinyl-based monomer, and vinyl cyanide-based monomer.

Additionally, when the preparation of the graft polymer latex is completed, coagulation, aging, washing and drying processes may be further performed to obtain graft polymer powder.

Hereinafter, the present invention will be described in detail with reference to embodiments so that those skilled in the art can easily carry out the present invention. However, the present invention may be embodied in several different forms, and therefore, is not limited to embodiments described herein.

**Preparation Example 1**

3 parts by weight of methacrylic acid (MAA), 97 parts by weight of methyl acrylate, 1.0 parts by weight of potassium persulfate, 0.5 parts by weight of t-dodecyl mercaptan, 50 parts by weight of ion-exchanged water, and 0.5 parts by weight of sodium dodecylbenzenesulfonate were mixed to prepare a polymerization solution.

150 parts by weight of ion-exchanged water and 0.2 parts by weight of sodium dodecylbenzenesulfonate were added to a nitrogen-substituted polymerization reactor, and a temperature inside the reactor was raised to 75 °C. Polymerization was performed while continuously adding the polymerization solution to the reactor at a constant rate for 7 hours, thereby preparing an acidic group-containing acrylic polymer latex (weight-average molecular weight: 400,000 g/mol).

**Preparation Example 2**

5 parts by weight of methacrylic acid (MAA), 95 parts by weight of ethyl acrylate, 1.0 parts by weight of potassium persulfate, 0.3 parts by weight of t-dodecyl mercaptan, 50 parts by weight of ion-exchanged water, and 0.5 parts by weight of sodium dodecylbenzenesulfonate were mixed to prepare a polymerization solution.

150 parts by weight of ion-exchanged water and 0.2 parts by weight of sodium dodecylbenzenesulfonate were added to a nitrogen-substituted polymerization reactor, and a temperature inside the reactor was raised to 75 °C. Polymerization was performed while continuously adding the polymerization solution to the reactor at a constant rate for 7 hours, thereby preparing an acidic group-containing acrylic polymer latex (weight-average molecular weight: 550,000 g/mol).

**Example 1**

<Preparation of second diene-based rubber polymer>

100 parts by weight (based on solid content) of a first butadiene rubber polymer latex (average particle diameter: 120 nm, gel content: 90 wt%) was heated to 45 °C while stirring. Then, 2.5 parts by weight (based on solid content) of the acidic group-containing acrylic polymer latex of Preparation Example 1 was added and mixed to prepare a second butadiene rubber polymer latex (average particle diameter: 370 nm).

<Preparation of first mixture>

0.5 parts by weight of poly(ethylene glycol) was added to 99.5 parts by weight (based on solid content) of the second butadiene rubber polymer latex and then aged while stirring for 10 minutes, thereby preparing a first mixture.

<Preparation of graft polymer>

58 parts by weight (based on solid content) of the first mixture was added to a nitrogen-substituted reactor, and then a temperature was raised to 60 °C. After the temperature elevation was completed, 0.05 parts by weight of t-butyl hydroperoxide, 0.06 parts by weight of dextrose, 0.06 parts by weight of sodium pyrophosphate, and 0.0015 parts by weight of ferrous sulfate were batch-added. Subsequently, polymerization was performed while continuously adding a predetermined amount of a monomer mixture consisting of 30 parts by weight of ion-exchanged water, 32 parts by weight of styrene, 10 parts by weight of acrylonitrile, 0.5 parts by weight of a potassium salt of a fatty acid, and 0.20 parts by weight of cumene hydroperoxide to the reactor for 4 hours, thereby preparing a graft polymer latex.

The graft polymer latex was coagulated with MgSO₄, aged, washed, dehydrated, and dried to prepare graft polymer powder.

**Examples 2 and 3**

A second diene-based rubber polymer, a first mixture, and a graft polymer were prepared in the same manner as in Example 1, except that an amount (based on solid content) of a second butadiene rubber polymer latex and an amount of poly(ethylene glycol) in the preparation of a first mixture of Example 1 were changed as shown in Table 1 below.

**Example 4**

<Preparation of second diene-based rubber polymer>

100 parts by weight (based on solid content) of a first butadiene rubber polymer latex (average particle diameter: 100 nm, gel content: 93 wt%) was heated to 45 °C while stirring. Then, 2.5 parts by weight (based on solid content) of the acidic group-containing acrylic polymer latex of Preparation Example 2 was added and mixed to prepare a second butadiene rubber polymer latex (average particle diameter: 400 nm).

<Preparation of first mixture>

2.5 parts by weight of poly(ethylene glycol) was added to 97.5 parts by weight (based on solid content) of the second butadiene rubber polymer latex and then aged while stirring for 30 minutes, thereby preparing a first mixture.

<Preparation of third diene-based rubber polymer>

65 parts by weight of ion-exchanged water, 75 parts by weight of 1,3-butadiene, 1.2 parts by weight of potassium rosinate, 0.8 parts by weight of potassium oleate, 0.3 parts by weight of t-dodecyl mercaptan, 0.8 parts by weight of K₂CO₃, and 0.3 parts by weight of potassium persulfate were batch-added to a nitrogen-substituted reactor, a temperature inside the reactor was raised to 70 °C, and then polymerization was performed. When a polymerization conversion rate reached 35%, 20 parts by weight of 1,3-butadiene and 0.3 parts by weight of potassium rosinate were added to the reactor, a temperature inside the reactor was raised to 75 °C, and then polymerization was performed. When a polymerization conversion rate reached 60%, 15 parts by weight of 1,3-butadiene was added, a temperature inside the reactor was raised to 80 °C, and then polymerization was performed. When a polymerization conversion rate reached 95%, the polymerization was terminated to obtain a third butadiene rubber polymer latex (average particle diameter: 300 nm, gel content: 87 wt%).

<Preparation of second mixture>

2.0 parts by weight of poly(ethylene glycol)-block-poly(propylene glycol)-block-poly(ethylene glycol) (Pluronic PE6800 commercially available from BASF) was added to 98.0 parts by weight (based on solid content) of the third butadiene rubber polymer latex and then aged while stirring for 30 minutes, thereby preparing a second mixture.

<Preparation of graft polymer>

39 parts by weight (based on solid content) of the first mixture and 26 parts by weight (based on solid content) of the second mixture were added to a nitrogen-substituted reactor, and then a temperature inside the reactor was raised to 60 °C. Afterward, 0.05 parts by weight of t-butyl hydroperoxide, 0.0600 parts by weight of dextrose, 0.0600 parts by weight of sodium pyrophosphate, and 0.0015 parts by weight of ferrous sulfate were batch-added to the reactor. Subsequently, polymerization was performed while continuously adding a predetermined amount of a monomer mixture consisting of 30 parts by weight of ion-exchanged water, 27 parts by weight of styrene, 8 parts by weight of acrylonitrile, 0.5 parts by weight of potassium oleate, and 0.20 parts by weight of cumene hydroperoxide to the reactor for 4 hours, thereby preparing a graft polymer latex.
The graft polymer latex was coagulated with MgSO₄, aged, washed, dehydrated, and dried to prepare graft polymer powder.

**Comparative Example 1**

<Preparation of second diene-based rubber polymer>

100 parts by weight (based on solid content) of a first butadiene rubber polymer latex (average particle diameter: 120 nm, gel content: 90 wt%) was heated to 45 °C while stirring. Then, 2.5 parts by weight (based on solid content) of the acidic group-containing acrylic polymer latex of Preparation Example 1 was added and mixed to prepare a second butadiene rubber polymer latex (average particle diameter: 370 nm).

<Preparation of graft polymer>

58 parts by weight (based on solid content) of the second butadiene rubber polymer latex was added to a nitrogen-substituted reactor, and then a temperature was raised to 60 °C. After the temperature elevation was completed, 0.05 parts by weight of t-butyl hydroperoxide, 0.0600 parts by weight of dextrose, 0.0600 parts by weight of sodium pyrophosphate, and 0.0015 parts by weight of ferrous sulfate were batch-added. Subsequently, polymerization was performed while continuously adding a predetermined amount of a monomer mixture consisting of 30 parts by weight of ion-exchanged water, 32 parts by weight of styrene, 10 parts by weight of acrylonitrile, 0.5 parts by weight of a potassium salt of a fatty acid, and 0.20 parts by weight of cumene hydroperoxide to the reactor for 4 hours, thereby preparing a graft polymer latex.

The graft polymer latex was coagulated with $MgSO_4$, aged, washed, dehydrated, and dried to prepare graft polymer powder.

**Comparative Example 2**

<Preparation of second diene-based rubber polymer>

2.5 parts by weight of poly(ethylene glycol) was added to 97.5 parts by weight (based on solid content) of a first butadiene rubber polymer latex (average particle diameter: 120 nm, gel content: 90 wt%), and then a temperature was raised to 45 °C while stirring. Then, 2.5 parts by weight (based on solid content) of the acidic group-containing acrylic polymer latex of Preparation Example 1 was added and mixed to prepare a second butadiene rubber polymer latex (average particle diameter: 300 nm).

<Preparation of graft polymer>

58 parts by weight (based on solid content) of a first mixture was added to a nitrogen-substituted reactor, and a temperature was raised to 60 °C. After the temperature elevation was completed, 0.05 parts by weight of t-butyl hydroperoxide, 0.0600 parts by weight of dextrose, 0.0600 parts by weight of sodium pyrophosphate, and 0.0015 parts by weight of ferrous sulfate were batch-added. Subsequently, polymerization was performed while continuously adding a predetermined amount of a monomer mixture consisting of 30 parts by weight of ion-exchanged water, 32 parts by weight of styrene, 10 parts by weight of acrylonitrile, 0.5 parts by weight of a potassium salt of a fatty acid, and 0.20 parts by weight of cumene hydroperoxide to the reactor for 4 hours, thereby preparing a graft polymer latex.

The graft polymer latex was coagulated with $MgSO_4$, aged, washed, dehydrated, and dried to prepare graft polymer powder.

**Comparative Example 3**

<Preparation of second diene-based rubber polymer>

100 parts by weight (based on solid content) of a first butadiene rubber polymer latex (average particle diameter: 120 nm, gel content: 90 wt%) was heated to 45 °C while stirring. Then, 2.5 parts by weight (based on solid content) of the acidic group-containing acrylic polymer latex of Preparation Example 1 was added and mixed to prepare a second butadiene rubber polymer latex (average particle diameter: 370 nm).

<Preparation of first mixture>

0.5 parts by weight of a potassium salt of a fatty acid was added to 99.5 parts by weight (based on solid content) of the second butadiene rubber polymer latex and then aged while stirring for 10 minutes, thereby preparing a first mixture.

<Preparation of graft polymer>

58 parts by weight (based on solid content) of the first mixture was added to a nitrogen-substituted reactor, and then a temperature was raised to 60 °C. After the temperature elevation was completed, 0.05 parts by weight of t-butyl hydroperoxide, 0.0600 parts by weight of dextrose, 0.0600 parts by weight of sodium pyrophosphate, and 0.0015 parts by weight of ferrous sulfate were batch-added. Subsequently, polymerization was performed while continuously adding a predetermined amount of a monomer mixture consisting of 30 parts by weight of ion-exchanged water, 32 parts by weight of styrene, 10 parts by weight of acrylonitrile, 0.5 parts by weight of a potassium salt of a fatty acid, and 0.20 parts by weight of cumene hydroperoxide to the reactor for 4 hours, thereby preparing a graft polymer latex.

The graft polymer latex was coagulated with $MgSO_4$, aged, washed, dehydrated, and dried to prepare graft polymer powder.

**Comparative Example 4**

<Preparation of second diene-based rubber polymer>

100 parts by weight (based on solid content) of a first butadiene rubber polymer latex (average particle diameter: 120 nm, gel content: 90 wt%) was heated to 45 °C while stirring. Then, 2.5 parts by weight (based on solid content) of the acidic group-containing acrylic polymer latex of Preparation Example 1 was added and mixed to prepare a second butadiene rubber polymer latex (average particle diameter: 370 nm).

<Preparation of first mixture>

2.5 parts by weight of KOH was added to 97.5 parts by weight (based on solid content) of the second butadiene rubber polymer latex and then aged while stirring for 10 minutes, thereby preparing a first mixture.

<Preparation of graft polymer>

58 parts by weight (based on solid content) of the first mixture was added to a nitrogen-substituted reactor, and then a temperature was raised to 60 °C. After the temperature elevation was completed, 0.05 parts by weight of t-butyl hydroperoxide, 0.0600 parts by weight of dextrose, 0.0600 parts by weight of sodium pyrophosphate, and 0.0015 parts by weight of ferrous sulfate were batch-added. Subsequently, polymerization was performed while continuously adding a predetermined amount of a monomer mixture consisting of 30 parts by weight of ion-exchanged water, 32 parts by weight of styrene, 10 parts by weight of acrylonitrile, 0.5 parts by weight of a potassium salt of a fatty acid, and 0.20 parts by weight of cumene hydroperoxide to the reactor for 4 hours, thereby preparing a graft polymer latex.

The graft polymer latex was coagulated with $MgSO_4$, aged, washed, dehydrated, and dried to prepare graft polymer powder.

**Comparative Example 5**

<Preparation of second diene-based rubber polymer>

97.5 parts by weight (based on solid content) of a first butadiene rubber polymer latex (average particle diameter: 120 nm, gel content: 90 wt%) was heated to 45 °C while stirring. Then, 2.5 parts by weight (based on solid content) of the acidic group-containing acrylic polymer latex of Preparation Example 1 was added, and subsequently, 2.5 parts by weight of poly(ethylene glycol) was added and mixed for 30 minutes to prepare a second butadiene rubber polymer latex (average particle diameter: 270 nm).

<Preparation of graft polymer>

58 parts by weight (based on solid content) of the second butadiene rubber polymer was added to a nitrogen-substituted reactor, and then a temperature was raised to 60 °C. After the temperature elevation was completed, 0.05 parts by weight of t-butyl hydroperoxide, 0.06 parts by weight of dextrose, 0.06 parts by weight of sodium pyrophosphate, and 0.0015 parts by weight of ferrous sulfate were batch-added. Subsequently, polymerization was performed while continuously adding a predetermined amount of a monomer mixture consisting of 30 parts by weight of ion-exchanged water, 32 parts by weight of styrene, 10 parts by weight of acrylonitrile, 0.5 parts by weight of a potassium salt of a fatty acid, and 0.20 parts by weight of cumene hydroperoxide to the reactor for 4 hours, thereby preparing a graft polymer latex.

The graft polymer latex was coagulated with $MgSO_4$, aged, washed, dehydrated, and dried to prepare graft polymer powder.

**Experimental Example 1**

The storage stability of each first mixture of Examples and Comparative Examples was measured as follows, and results thereof are shown in Tables 1 and 2 below. In the case of Comparative Examples 1, 2, and 5, the second diene-based rubber polymer was used instead of a first mixture to measure storage stability.

(1) Particle diameter variation (nm): The average particle diameter of the first mixture was measured by dynamic light scattering. Specifically, the first mixture latex was put into a 1 $\ell$ bottle, the bottle was sealed and then stored in a water bath whose average temperature was maintained at 55 °C for 3 days, and then the average particle diameter of the first mixture was measured by dynamic light scattering. Then, the measured average particle diameter was substituted into the following equation to calculate a particle diameter variation.

Particle diameter variation (nm) = (Average particle diameter of first mixture after 3-day storage) - (Average particle diameter of first mixture before storage)

(2) Coagulum (ppm): The first mixture latex was filtered through a 100-mesh wire mesh filter, then a polymer that did not pass through the wire mesh was dried in a hot air dryer set at 100 °C for an hour, and a ratio of the weight of dry solid relative to the weight of solid of the first mixture in the first mixture latex was obtained.

$$\text{Coagulum (ppm)} = \{(\text{Weight of dry solid of polymer that did not pass through}$$

$$\text{100-mesh wire mesh}) / (\text{Weight of solid of first mixture})\} \times 1,000,000$$

**Experimental Example 2**

The physical properties of each graft polymer of Examples and Comparative Examples were measured as follows, and results thereof are shown in Tables 1 and 2 below.

(1) Coagulum (ppm): The graft polymer latex was filtered through a 100-mesh wire mesh filter, then a polymer that did not pass through the wire mesh was dried in a hot air dryer set at 100 °C for an hour, and the weight of dry solid and the weight of the graft polymer in the graft polymer latex were substituted into the following equation to calculate a coagulum content.

$$\text{Coagulum (ppm)} = \{(\text{Weight of dry solid of polymer that did not pass through}$$

$$\text{100-mesh wire mesh}) / (\text{Weight of graft polymer})\} \times 1,000,000$$

(2) Particle size distribution (coefficient of variation): A particle size distribution refers to a standard deviation of the particle diameter of the graft polymer relative to the average particle diameter of the graft polymer (standard deviation of the particle diameter of the graft polymer/the average particle diameter of the graft polymer) and was measured by dynamic light scattering. In this case, when a particle size distribution value was equal to or higher than 0.40, it was determined that a multimodal diene-based rubber polymer was prepared.

**Experimental Example 3**

25 parts by weight of each graft polymer of Examples and Comparative Examples and 75 parts by weight of a styrene/acrylonitrile non-grafted polymer (acrylonitrile monomer unit: 24 wt%, weight-average molecular weight measured by gel permeation chromatography: 130,000 g/mol) were mixed to prepare a thermoplastic resin composition. The thermoplastic resin composition was extruded to prepare a pellet, and then the pellet was injection-molded to prepare a sample. The physical properties of the sample were measured by methods describe below, and results thereof are shown in Tables 1 and 2 below.

(1) Melt flow index (g/10 min): measured under conditions of 220 °C and 10 kg in accordance with ASTM D1238.

(2) Room-temperature impact strength (kg·m/m, 1/4 In): measured at 23 °C in accordance with ASTM D256.

(3) Falling ball impact strength (J): measured at 23 °C in accordance with ASTM D3763

[Table 1]

| Classification | | | Example 1 | Example 2 | Example 3 | Example 4 |
|---|---|---|---|---|---|---|
| Preparation of second diene-based rubber polymer | First diene-based rubber polymer | Average particle diameter (nm) | 120 | 120 | 120 | 100 |
| | | Content (parts by weight) | 100 | 100 | 100 | 100 |
| | Acidic group-containing acrylic polymer | Type | Preparation Example 1 | Preparation Example 1 | Preparation Example 1 | Preparation Example 2 |
| | | Content (parts by weight) | 2.5 | 2.5 | 2.5 | 2.5 |
| | Average particle diameter of second diene-based rubber polymer(nm) | | 370 | 370 | 400 | 400 |
| Preparation of first mixture | Content of second diene-based rubber polymer (parts by weight) | | 99.5 | 97.5 | 95.0 | 97.5 |
| | Emulsifier | Type | Poly(ethylen e glycol) | Poly(ethylen e glycol) | Poly(ethylen e glycol) | Poly(ethylene glycol) |
| | | Content (parts by weight) | 0.5 | 2.5 | 5.0 | 2.5 |
| First mixture | Storage stability (3 days) | Particle diameter variation (nm) | <5 | none | none | none |
| | | Coagulum (ppm) | <1,000 | <1,000 | <1,000 | <1,000 |

(continued)

| Classification | | | Example 1 | Example 2 | Example 3 | Example 4 |
|---|---|---|---|---|---|---|
| Preparation of second mixture | Third diene-based rubber polymer | Average particle diameter (nm) | - | - | - | 300 |
| | | Content (parts by weight) | - | - | - | 98.0 |
| | Emulsifier | Type | - | - | - | Poly(ethylene glycol)-block-poly(propylen e glycol)-block-poly(ethylene glycol) |
| | | Content (parts by weight) | - | - | - | 2.0 |
| Preparation of graft polymer | Content of first mixture (parts by weight) | | 58 | 58 | 58 | 39 |
| | Content of second mixture (parts by weight) | | 0 | 0 | 0 | 26 |
| | Content of styrene (parts by weight) | | 32 | 32 | 32 | 27 |
| | Content of acrylonitrile (parts by weight) | | 10 | 10 | 10 | 8 |
| | Coagulum (ppm) | | <2,000 | <2,000 | <2,000 | <2,000 |
| Graft polymer | Particle size distribution | | 0.40 | 0.45 | 0.50 | 0.45 |
| Sample | Melt flow index (g/10 min) | | 25 | 24 | 24 | 25 |
| | Room-temperature impact strength (kg·m/m) | | 25 | 25 | 25 | 26 |
| | Falling ball impact strength (J) | | 45 | 45 | 43 | 50 |

[Table 2]

| Classification | | | Comparative Example 1 | Comparative Example 2 | Comparative Example 3 | Comparative Example 4 | Comparative Example 5 |
|---|---|---|---|---|---|---|---|
| Preparation of second diene-based rubber polymer | First diene-based rubber polymer | Average particle diameter (nm) | 120 | 120 | 120 | 120 | 120 |
| | | Content (parts by weight) | 100 | 97.5 | 100 | 100 | 97.5 |
| | Emulsifier | Type | - | Poly(ethylene glycol) | - | - | Poly(ethylene glycol) |
| | | Addition point of time | - | Before addition of acidic group-containing acrylic polymer | | | Immediately after addition of acidic group-containing acrylic polymer |
| | | Content (parts by weight) | - | 2.5 | - | - | 2.5 |
| | Acidic group-containing acrylic polymer | Type | Preparation Example 1 | Preparation Example 1 | Preparation Example 1 | Preparation Example 1 | Preparation Example 1 |
| | | Content (parts by weight) | 2.5 | 2.5 | 2.5 | 2.5 | 2.5 |
| | Average particle diameter of second diene-based rubber polymer (nm) | | 370 | 300 | 370 | 370 | 270 |
| Preparation of first mixture | Content of second diene-based rubber polymer (parts by weight) | | - | - | 97.5 | 97.5 | 100 |
| | Emulsifier or base | Type | - | - | Potassium salt of fatty acid | KOH | - |
| | | Content (parts by weight) | - | - | 2.5 | 2.5 | - |
| First mixture | Storage stability (3 days) | Particle diameter variation (nm) | - | - | >5 | >5 | - |
| | | Coagulum (ppm) | - | - | >2,000 | >2,000 | - |

(continued)

| Classification | | | Comparative Example 1 | Comparative Example 2 | Comparative Example 3 | Comparative Example 4 | Comparative Example 5 |
|---|---|---|---|---|---|---|---|
| Second diene-based rubber polymer | Storage stability (3 days) | Particle diameter variation (nm) | >5 | >5 | - | - | none |
| | | Coagulum (ppm) | >2,000 | >2,000 | - | - | <1,000 |
| Preparation of graft polymer | | Content of first mixture (parts by weight) | 0 | 0 | 58 | 58 | 0 |
| | | Second diene-based rubber polymer | 58 | 58 | 0 | 0 | 58 |
| | | Content of second mixture (parts by weight) | 0 | 0 | 0 | 0 | 0 |
| | | Content of styrene (parts by weight) | 32 | 32 | 32 | 32 | 32 |
| | | Content of acrylonitrile (parts by weight) | 10 | 10 | 10 | 10 | 10 |
| | | Coagulum (ppm) | <2,000 | <2,000 | <2,000 | <2,000 | <2,000 |
| Graft polymer | | Particle size distribution | 0.45 | 0.40 | 0.40 | 0.50 | >0.50 |
| Sample | | Melt flow index (g/10 min) | 24 | 24 | 25 | 24 | 21 |
| | | Room-temperature impact strength (kg·m/m) | 25 | 22 | 22 | 27 | 20 |
| | | Falling ball impact strength (J) | 45 | 40 | 40 | 42 | 40 |

Referring to Tables 1 and 2, in the case of Examples 1 to 4, the storage stability of the first mixture was excellent, polymerization stability was excellent due to a small amount of a coagulum of the graft polymer, and preparation efficiency was excellent. Also, in the case of Examples 1 to 4, the graft polymer exhibited a high particle size distribution value and thus had a multimodal particle diameter distribution, and accordingly, the sample exhibited excellent falling ball impact strength. However, in the case of Comparative Example 1 in which a second diene-based rubber polymer and an emulsifier were not mixed, the storage stability of the first mixture was degraded as compared to Examples 1 to 4. In the case of Comparative Example 2 in which a first diene-based rubber polymer and a non-ionic emulsifier were mixed before enlargement, the storage stability of the first mixture was degraded, and the room-temperature impact strength and falling ball impact strength of the sample were degraded as compared to Examples 1 to 4.

In the case of Comparative Example 3 in which a second diene-based rubber polymer and a potassium salt of a fatty acid were mixed, storage stability was degraded, and the room-temperature impact strength and falling ball impact strength of the sample were degraded as compared to Examples 1 to 4.

In the case of Comparative Example 4 in which a second diene-based rubber polymer and a base were mixed, storage stability was degraded, and the falling ball impact strength of the sample was slightly degraded as compared to Examples 1 to 4.

In the case of Comparative Example 5 in which poly(ethylene glycol) was added immediately after the addition of the acidic group-containing acrylic polymer of Preparation Example 1 in preparation of a second diene-based rubber polymer, the average particle diameter of the second diene-based rubber polymer was small due to insufficient enlargement, and the particle size distribution value of the graft polymer was excessively increased as compared to Examples 1 to 4. Accordingly, the room-temperature impact strength and falling ball impact strength of the sample were degraded.

**Claims**

1. A method of preparing a graft polymer comprising:

   preparing a second diene-based rubber polymer by enlarging a first diene-based rubber polymer with an acidic group-containing acrylic polymer;
   preparing a first mixture comprising the second diene-based rubber polymer and a non-ionic emulsifier; and
   preparing a graft polymer latex by polymerizing an aromatic vinyl-based monomer and a vinyl cyanide-based monomer in the presence of the first mixture.

2. The method of preparing a graft polymer of claim 1, wherein the non-ionic emulsifier is one or more selected from the group consisting of poly(ethylene glycol) and poly(ethylene glycol)-block-poly(propylene glycol)-block-poly(ethylene glycol).

3. The method of preparing a graft polymer of claim 1, wherein the first mixture comprises the second diene-based rubber polymer and the non-ionic emulsifier in a weight ratio of 95.0:5.0 to 99.5:0.5.

4. The method of preparing a graft polymer of claim 1, wherein the acidic group-containing acrylic polymer comprises an ethylenically unsaturated acid monomer unit and a (meth)acrylate-based monomer unit.

5. The method of preparing a graft polymer of claim 1, wherein the acidic group-containing acrylic polymer has a weight-average molecular weight of 300,000 to 600,000 g/mol.

6. The method of preparing a graft polymer of claim 1, wherein the first diene-based rubber polymer has an average particle diameter of 50 to 200 nm, and the second diene-based rubber polymer has an average particle diameter of 250 to 450 nm.

7. The method of preparing a graft polymer of claim 1, comprising, before the step of preparing a graft polymer latex:

   preparing a third diene-based rubber polymer by polymerizing diene-based monomers; and
   preparing a second mixture comprising the third diene-based rubber polymer and a non-ionic emulsifier, wherein the step of preparing a graft polymer latex is a step of preparing a graft polymer latex by polymerizing the aromatic vinyl-based monomer and the vinyl cyanide-based monomer in the presence of the first mixture and the second mixture.

8. The method of preparing a graft polymer of claim 7, wherein the third diene-based rubber polymer has an average particle diameter of 250 to 450 nm.

9. The method of preparing a graft polymer of claim 7, wherein the second mixture comprises the third diene-based rubber polymer and the non-ionic emulsifier in a weight ratio of 95.0:5.0 to 99.5:0.5.

10. The method of preparing a graft polymer of claim 7, wherein a weight ratio of the first mixture and the second mixture is 95:5 to 50:50.

## INTERNATIONAL SEARCH REPORT

| International application No. |
|---|
| **PCT/KR2022/014224** |

**A.      CLASSIFICATION OF SUBJECT MATTER**

**C08F 279/02**(2006.01)i; **C08F 2/30**(2006.01)i

According to International Patent Classification (IPC) or to both national classification and IPC

**B.      FIELDS SEARCHED**

Minimum documentation searched (classification system followed by classification symbols)

C08F 279/02(2006.01); C08F 2/22(2006.01); C08F 265/06(2006.01); C08F 279/00(2006.01); C08F 279/04(2006.01); C08J 3/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디엔계 고무질 중합체(diene rubber polymer), 아크릴계 중합체(acrylate polymer), 비대화(enlarging), 비이온계 유화제(nonionic emulsifier), 그래프트 중합체(graft polymer)

**C.      DOCUMENTS CONSIDERED TO BE RELEVANT**

| Category* | Citation of document, with indication, where appropriate, of the relevant passages | Relevant to claim No. |
|---|---|---|
| X | US 3944630 A (IDE, F. et al.) 16 March 1976 (1976-03-16)<br>See abstract; claim 1; and example 1. | 1,3-10 |
| Y | | 2 |
| Y | KR 10-1114113 B1 (LG CHEM, LTD.) 15 February 2012 (2012-02-15)<br>See abstract; and claims 1-3. | 2 |
| A | US 2007-0219294 A1 (UEDA, T.) 20 September 2007 (2007-09-20)<br>See abstract; and claims 1-11. | 1-10 |
| A | EP 0390146 A1 (TAKEDA CHEMICAL INDUSTRIES, LTD.) 03 October 1990 (1990-10-03)<br>See entire document. | 1-10 |
| A | KR 10-2005-0046047 A (CHEIL INDUSTRIES INC.) 18 May 2005 (2005-05-18)<br>See entire document. | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2023** | **13 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/014224**

| Patent document cited in search report | | | Publication date (day/month/year) | Patent family member(s) | | | Publication date (day/month/year) |
|---|---|---|---|---|---|---|---|
| US | 3944630 | A | 16 March 1976 | AU | 7254074 | A | 26 February 1976 |
| | | | | CA | 1049685 | A | 27 February 1979 |
| | | | | DE | 2441107 | A1 | 27 March 1975 |
| | | | | DE | 2441107 | C2 | 15 September 1983 |
| | | | | FR | 2242434 | A1 | 28 March 1975 |
| | | | | FR | 2242434 | B1 | 06 April 1984 |
| | | | | GB | 1474092 | A | 18 May 1977 |
| | | | | IN | 142236 | B | 11 June 1977 |
| | | | | IT | 1020267 | B | 20 December 1977 |
| | | | | JP | 50-094061 | A | 26 July 1975 |
| | | | | JP | 50-121387 | A | 23 September 1975 |
| | | | | NL | 180593 | B | 16 October 1986 |
| | | | | NL | 180593 | C | 16 March 1987 |
| | | | | NL | 7411492 | A | 04 March 1975 |
| KR | 10-1114113 | B1 | 15 February 2012 | KR | 10-2009-0084334 | A | 05 August 2009 |
| US | 2007-0219294 | A1 | 20 September 2007 | CA | 2559129 | A1 | 15 September 2005 |
| | | | | CN | 1918194 | A | 21 February 2007 |
| | | | | EP | 1739102 | A1 | 03 January 2007 |
| | | | | JP | 4747090 | B2 | 10 August 2011 |
| | | | | KR | 10-2007-0004784 | A | 09 January 2007 |
| | | | | MY | 137685 | A | 27 February 2009 |
| | | | | TW | 200602366 | A | 16 January 2006 |
| | | | | WO | 2005-085299 | A1 | 15 September 2005 |
| EP | 0390146 | A1 | 03 October 1990 | CA | 2013306 | A1 | 30 September 1990 |
| | | | | DE | 69031606 | T2 | 26 March 1998 |
| | | | | EP | 0390146 | B1 | 22 October 1997 |
| | | | | JP | 03-014856 | A | 23 January 1991 |
| | | | | JP | 2628095 | B2 | 09 July 1997 |
| | | | | KR | 10-0148019 | B1 | 17 August 1998 |
| | | | | KR | 10-1990-0014471 | A | 24 October 1990 |
| | | | | TW | 209871 | B | 21 July 1993 |
| | | | | US | 5183858 | A | 02 February 1993 |
| | | | | US | 5290858 | A | 01 March 1994 |
| KR | 10-2005-0046047 | A | 18 May 2005 | KR | 10-0520461 | B1 | 11 October 2005 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210129837
- KR 1020220120161

- KR 20200011701 A